# EUROPÄISCHE PATENTSCHRIFT

(11) **EP 0 484 954 B1**
(45) Veröffentlichungstag und Bekanntmachung des Hinweises auf die Patenterteilung: **21.06.1995**
(21) Anmeldenummer: 91119025.4
(22) Anmeldetag: 07.11.1991
(51) Int. Cl.: B01D 53/02, B01D 53/34

(54) **Verfahren zum Abtrennen von Ammoniak aus Gasen, insbesondere Abgasen von Verbrennungsprozessen**
Process for separating ammonia from gases, in particular exhaust gases from combustion processes
Procédé pour élimener l'ammoniac de gaz, en particulier des gaz d'échappement de procédés de combustion

(30) Priorität: 08.11.1990 DE 4035554
(43) Veröffentlichungstag der Anmeldung: 13.05.1992
(73) Patentinhaber: MARTIN GmbH für Umwelt- und Energietechnik, D-80807 München (DE)
(72) Erfinder: Martin, Johannes, Dipl.-Ing., W-8124 Seeshaupt (DE)
(74) Vertreter: Zmyj, Erwin, Dipl.-Ing., Dipl.-Wirtsch.-Ing.

(56) Entgegenhaltungen:
- EP-A- 0 297 543
- WO-A-86/05120
- DE-A- 3 919 124
- US-A- 5 013 335

## Beschreibung

Die Erfindung bezieht sich auf ein Verfahren zum Abtrennen von Ammoniak aus Gasen, insbesondere Abgasen von Verbrennungsprozessen, in denen das Ammoniak gebildet oder freigesetzt wird, bzw. bei denen Ammoniak oder ein Stoff, der unter Temperatureinwirkung Ammoniak bildet, zugeführt wird.

Bei der Behandlung von Abgasen aus Verbrennungsprozessen zur Minderung der Stickoxid-Konzentrationen wird entweder Ammoniak vor einem Reduktionskatalysator dem Gasstrom zugeführt (SCR-Prozeß), oder es wird Ammoniak bzw. ein Stoff, der unter Temperatureinwirkung Ammoniak bildet (z.B. Harnstoff, Hirschhornsalz o.ä.), in den Gasstrom im Temperaturbereich oberhalb 700 °C eingedüst (SNCR-Prozeß). In beiden Fällen kann Ammoniak, das nicht bei der Reduktionsreaktion des NOₓ verbraucht wurde, als sog. Ammoniakschlupf mit den Abgasen ausgetragen werden. Dies führt sowohl zu einer Belastung der Atmosphäre als auch der nachgeschalteten Abgasreinigungseinrichtungen, wenn Ammoniak bzw. Ammoniakverbindungen (Ammoniumchlorid, Ammoniumsulfat, Ammoniumbisulfat) mit den Stäuben aus einer Filteranlage bzw. dem Abwasser aus einer Naßwäsche ausgeschleust werden.

Eine Abscheidung der o.g. Ammonium-Salze, die im Abgasweg bei Temperaturen < 300 °C gebildet werden, kann zwar vor allem mit Tuchfiltern sehr effektiv durchgeführt werden, jedoch ergeben sich bei der weiteren Behandlung dieser Filterstäube Probleme. Bei einer evtl. Anfeuchtung mit Wasser wird Ammoniak wieder gasförmig ausgetrieben und entweicht in die Atmosphäre, oder es entsteht ein ammoniumsalzhaltiges Abwasser als Sickerwasser auf einer Deponie. Eine gefahrlose Endlagerung dieser Stäube ist somit in Frage gestellt.

Aufgabe der Erfindung ist es, ein Verfahren anzugeben, mit dessen Hilfe Ammoniak aus zu reinigenden Gasen entfernt werden kann, in der Weise, daß der das Ammoniak aufnehmende oder bindende Stoff gefahrlos einer Endlagerung zugeführt werden kann, ohne daß Ammoniak wieder entweicht.

Diese Aufgabe wird durch die im Anspruch 1 oder im Anspruch 2 angegebenen Maßnahmen gelöst. Dabei kann in vorteilhafter Weise das Behandlungsmedium in fester Form oder in Form einer Suspension zugeführt werden. Wenn Abgase von Verbrennungsprozessen gereinigt werden sollen, dann besteht die Möglichkeit, das Behandlungsmedium entweder den Abgasen in fein verteilter Form zuzuführen oder direkt dem Brennstoff beizumischen, wodurch die gewünschte Reaktion, die zur Bindung des Ammoniaks führt, bereits schon im Entstehungszustand des Ammoniaks einsetzen kann.

Die vorgeschlagenen Verbindungen weisen dabei den Vorteil auf, daß sie das Ammoniak nicht nur sehr gut aus den Abgasen adsorptiv entfernen, sondern auch in ihrer inneren Struktur sehr fest binden können. Dies vermeidet die o.g. späteren Umweltbelastungen durch erneutes Freisetzen.

## Patentansprüche

1. Verfahren zum Abtrennen von Ammoniak aus Gasen, inbesondere Abgasen von Verbrennungsprozessen, in denen das Ammoniak gebildet oder freigesetzt wird bzw. bei denen Ammoniak oder ein Stoff, der unter Temperatureinwirkung Ammoniak bildet, zugeführt wird, **dadurch gekennzeichnet,** daß dem zu reinigenden Gas ein Stoff aus der Gruppe der Zeolithe als Behandlungsmedium in feiner Verteilung bei guter Durchmischung mit dem Gas zugesetzt wird.

2. Verfahren zum Abtrennen von Ammoniak auf Gasen, insbesondere Abgasen von Verbrennungsprozessen, in denen das Ammoniak gebildet und freigesetzt wird bzw. bei denen Ammoniak oder ein Stoff, der unter Temperatureinwirkung Ammoniak bildet, zugeführt wird, **dadurch gekennzeichnet,** daß dem zu reinigenden Gas aktiviertes Siliziumdioxid als Behandlungsmedium in feiner Verteilung bei guter Durchmischung mit dem Gas zugesetzt wird.

3. Verfahren nach Anspruch 1 oder 2, **dadurch gekennzeichnet,** daß das Behandlungsmedium in fester Form zugeführt wird.

4. Verfahren nach Anspruch 1 oder 2, **dadurch gekennzeichnet,** daß das Behandlungsmedium in Form einer Suspension zugeführt wird.

5. Verfahren nach einem der Ansprüche 1 bis 4, bei Reinigung von Abgasen aus Verbrennungsprozessen, **dadurch gekennzeichnet**, daß das Behandlungsmedium dem Brennstoff beigemischt wird.

## Claims

1. Process for separating ammonia from gases, in particular exhaust gases from combustion processes, in which the ammonia is formed or released or in which ammonia or a substance that forms ammonia under the influence of heat is supplied, characterised in that a substance from the group of zeolites is added in finely distributed form as a treating agent to the gas to be purified, being thoroughly mixed with the gas.

2. Process for separating ammonia from gases, in particular exhaust gases from combustion processes, in which the ammonia is formed or released or in which ammonia or a substance that forms ammonia under the influence of heat is supplied, characterised in that activated silicon dioxide is added in finely distributed form as a treating agent to the gas to be purified, being thoroughly mixed with the gas.

3. Process according to claim 1 or claim 2, characterised in that the treating agent is supplied in solid form.

4. Process according to claim 1 or claim 2, characterised in that the treating agent is supplied in the form of a suspension.

5. Process according to one of claims 1 to 4, for the purification of exhaust gases from combustion processes, characterised in that the treating agent is mixed with the fuel.

## Revendications

1. Procédé destiné à extraire de l'ammoniac de gaz, en particulier d'effluents gazeux provenant de processus de combustion, dans lesquels de l'ammoniac se forme ou se libère, ou auxquels est ajouté de l'ammoniac ou une matière formant de l'ammoniac sous l'effet de la température, caractérisé en ce qu'il est ajouté aux gaz à épurer en tant que milieu de traitement une matière du groupe des zéolithes finement répartie, qui est bien mélangée aux gaz.

2. Procédé destiné à extraire de l'ammoniac de gaz, en particulier d'effluents gazeux provenant de processus de combustion, dans lesquels de l'ammoniac se forme ou se libère, ou auxquels est ajouté de l'ammoniac ou une matière formant de l'ammoniac sous l'effet de la température, caractérisé en ce qu'il est ajouté aux gaz à épurer en tant que milieu de traitement du dioxyde de silicium activé finement réparti, qui est bien mélangé aux gaz.

3. Procédé selon l'une des revendications 1 ou 2, caractérisé en ce que le milieu de traitement est ajouté sous forme solide.

4. Procédé selon l'une des revendications 1 ou 2, caractérisé en ce que le milieu de traitement est ajouté sous la forme d'une suspension.

5. Procédé selon l'une quelconque des revendications 1 à 4, lors de l'épuration d'effluents gazeux provenant de processus de combustion, caractérisé en ce que le milieu de traitement est mélangé à la matière combustible.
